# DEMANDE DE BREVET EUROPEEN

(11) **EP 1 995 941 A2**
(43) Date de publication de la demande: **26.11.2008**
(21) Numéro de dépôt: 08156838.8
(22) Date de dépôt: 23.05.2008
(51) Int. Cl.: H04M 11/00, H04M 3/42

(54) **Dispositif et procédé de gestion de machines à travers un réseau de télécommunication**

(30) Priorité: 25.05.2007 FR 0755260
(71) Demandeur: France Télécom, 75015 Paris (FR)
(72) Inventeur: Bernhard, Raphaël, 06110, Le Cannet (FR)

(57) **Abrégé**

Procédé de configuration d'un serveur de train de sonnerie associé à une machine apte à communiquer à travers un réseau de télécommunication, comprenant:
- une étape (F2) de réception par ledit serveur de train de sonnerie, en provenance de ladite machine, d'un signal d'information comprenant un identifiant représentatif d'un état dans lequel se trouve ladite machine au moment de l'émission dudit signal,
- une étape (F3) de configuration dudit serveur de train de sonnerie de manière à ce qu'un équipement, demandant l'établissement d'une liaison de communication à travers ledit réseau avec ladite machine, reçoive en retour dans le train de sonnerie un signal sonore représentatif de l'état indiqué au moyen dudit signal d'information.

## Description

L'invention concerne le domaine des télécommunications, et notamment un dispositif et procédé de gestion d'au moins une machine à travers un réseau de télécommunication.

L'invention concerne le domaine dit "machine to machine", appelé plus communément M2M, dans lequel les machines, qui sont des objets autonomes communicants, sont disséminées dans l'environnement avec lequel elles interagissent et gérées à distance à travers un réseau de télécommunication. Ces machines doivent garder en permanence leur capacité à communiquer, car si celle-ci est perdue, il n'est plus possible de connaître l'état de ces machines et il faut notamment :
- soit attendre que la machine retrouve spontanément sa faculté de communication, sans savoir si cette situation interviendra à nouveau,
- soit intervenir physiquement sur la machine, par exemple par redémarrage électrique, pour ramener cette machine dans un état où elle sera à nouveau apte à communiquer.

Une telle opération peut s'avérer très onéreuse et complexe si la machine communicante est située dans un lieu hostile (forêt, bouée flottante, etc...) ou dans un milieu ne permettant pas une intervention physique de maintenance sur la machine. Par conséquent le maintien permanent d'au moins un lien de communication avec ces machines est un enjeu majeur: idéalement, il doit toujours être possible de déterminer si la machine est en état de fonctionnement ou si elle nécessite une maintenance.

Pour palier à cette problématique de connaissance de la capacité de machine à communiquer, il n'existe aucune solution connue autre que le maintien d'au moins un lien de communication, permanent ou au moins semi-permanent, entre un serveur de gestion et la machine. Ainsi, pour une machine communicante autonome critique, il est de coutume d'ajouter un second lien de communication, indépendant du lien de communication principal et dont la seule fonction est de réaliser des opérations d'administration sur la machine lorsque cette dernière n'est plus en mesure de communiquer à travers son lien de communication principal. Cependant, cette solution est particulièrement onéreuse et ne peut pas être utilisée pour des objets communicants autonomes de faible coût, comme c'est souvent le cas dans les applications M2M.

Il existe donc un besoin pour une solution simple permettant de connaitre l'état d'une machine, notamment sa capacité à communiquer, y compris dans les situations où le lien de communication entre cette machine et le serveur de gestion associé est rompu.

Dans ce but, l'invention a pour objet un procédé de configuration d'un serveur de train de sonnerie selon la revendication 1.

L'invention consiste à exploiter les possibilités de configuration, disponibles primitivement dans le réseau de télécommunication, au niveau d'un serveur de train de sonnerie associé à une machine, pour la signalisation et la détermination de l'état d'une machine. Dans une phase de configuration, un signal sonore représentatif de chacun des états possibles de la machine est enregistré au niveau d'un serveur de train de sonnerie. Après cette phase de configuration, la machine signale son état par envoi d'un signal d'information identifiant un signal sonore parmi ceux enregistrés. L'état de la machine peut être obtenu à tout moment à partir du serveur de train de sonnerie, et ce indépendamment de la capacité de la machine à communiquer à cet instant précis.

Dans le cas d'un réseau téléphonique commuté (GSM ou RTC), il est notamment possible de programmer l'information sonore qui sera transmise dans le train de sonnerie lors de la demande d'établissement d'un lien de communication avec la machine. Lors d'un appel téléphonique dans un réseau téléphonique commuté, le train de sonnerie est diffusé de manière indépendante de l'état de connexion au réseau téléphonique de l'équipement appelé. En effet, il n'est pas nécessaire que la machine soit en état de pouvoir communiquer pour obtenir le train de sonnerie associé, car c'est le réseau téléphonique qui fournit ce train de sonnerie. Il est donc possible de mettre en place un protocole d'interrogation en vue de connaître l'état d'une machine qui ne nécessite pas que la machine concernée soit connectée au réseau téléphonique au moment de la phase d'interrogation.

Etant donné que l'invention utilise des fonctions primitives du réseau de télécommunication associées à un lien de communication utilisé pour communiquer avec la machine, aucun dispositif supplémentaire n'est nécessaire pour la mise en oeuvre de l'invention. L'invention est de ce fait simple et peu coûteuse à mettre en oeuvre.

L'état signalé par la machine est celui dans lequel se trouvait cette machine au moment où elle a envoyé à un serveur de train de sonnerie le signal d'information pour commander la configuration du train de sonnerie associé à la machine.

De préférence, les états signalés par la machine sont des états correspondant chacun à un stade atteint par ladite machine lors d'une exécution d'un processus. Ce processus est par exemple un processus de connexion à un réseau.

La mise en place d'un protocole d'interrogation tel que décrit ci-dessus permet dans ce cas de déterminer le dernier état signalé par la machine, et par voie de conséquence, la dernière étape effectuée correctement par la machine lors de sa tentative de connexion au réseau. Cette information est obtenue sans avoir à communiquer avec la machine et ce, que la machine soit au final apte à communiquer ou non. Il est possible d'établir un diagnostic de l'état de la machine à partir de l'information d'état reçue, et notamment de déterminer si une opération de maintenance est nécessaire ou non sur cette machine.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données du serveur de train de sonnerie et conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention a également pour objet une machine selon la revendication 6, un serveur de train de sonnerie selon la revendication 7 et un dispositif de gestion selon la revendication 8.

Les avantages énoncés pour le procédé selon l'invention sont transposables à ces différents dispositifs coopérant pour la mise en oeuvre de l'invention, à savoir le serveur de train de sonnerie, le dispositif de gestion et la machine selon l'invention.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de télécommunication pour la mise en oeuvre de l'invention;
- la figure 2a représente sous forme d'organigramme les première et deuxième phases du procédé selon l'invention;
- la figure 2b représente sous forme d'organigramme la troisième phase du procédé selon l'invention.

L'invention est applicable à tout type de machine communicante, que ce soit un terminal de communication, ou encore des machines telles que capteurs, actionneurs, distributeurs de boisson, compteurs électrique, etc.

L'invention est également applicable à un type de machine particulier que sont les passerelles GPRS. Ces passerelles sont utilisées par exemple pour établir un pont de communication entre des capteurs physiques (capteurs de température, capteur de localisation géographique, etc) et une application distante qui collecte les informations venant de ces différents capteurs. De telles passerelles doivent de préférence être totalement autonomes et ne nécessiter aucune intervention humaine.

L'invention est décrite plus en détail dans le cadre d'un exemple d'application à une telle passerelle.

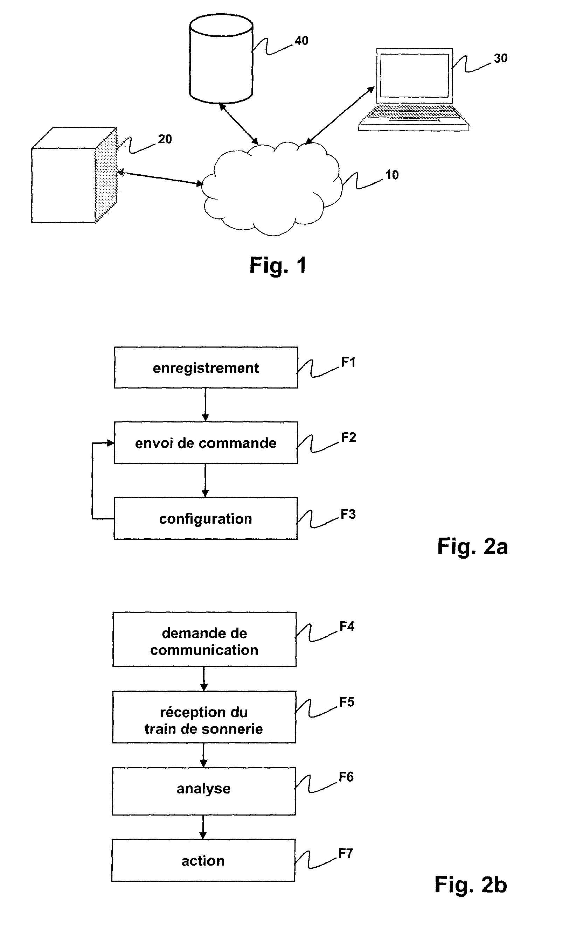

Les différents éléments coopérant pour la mise en oeuvre de l'invention sont représentés schématiquement à la figure 1. Ces différents éléments sont aptes à communiquer à travers un réseau 10 de télécommunication, qui en l'occurrence est un réseau GSM (Global System for Mobile communication) / GPRS (General Packet Radio Service).

Ces éléments sont :
- une machine communicante autonome 20, équipée d'un modem GPRS associé à un numéro de téléphone, par exemple +33611111111;
- un serveur de télécommunication 40, équipé d'un module de connexion au réseau 10 associé à un numéro de téléphone, par exemple +33777, et permettant de programmer les trains de sonnerie d'au moins une partie des équipements connectés au réseau 10, en particulier le train de sonnerie de la machine 20;
- une application distante de gestion 30, mise en oeuvre dans un serveur de gestion équipé d'un module de connexion au réseau 10 et apte à établir une liaison de communication avec la machine 20 via le réseau 10.

La machine communicante 20 est, dans l'exemple décrit, une passerelle GPRS.

En cas de panne logicielle ou matérielle de la plateforme, il n'est plus possible d'établir une liaison de communication avec celle-ci. Il n'est notamment plus possible de connaître l'état de cette dernière, ni de déterminer si une mise à jour du logiciel embarqué dans la passerelle est nécessaire ou si une intervention sur le matériel de cette passerelle est nécessaire. L'invention vient répondre à ce problème.

Les différentes étapes du procédé selon l'invention sont représentées de manière schématique sur les figures 2a et 2b.

Dans une première phase du procédé selon l'invention, dite *phase de configuration,* une pluralité de signaux sonores à utiliser par le serveur de télécommunication 40 sont enregistrés, chacun de ces signaux étant respectivement associé à un état possible de la machine 20. Un signal sonore est donc représentatif d'un des états répertoriés dans lequel la machine 20 est susceptible de se trouver. Cette phase de configuration correspond à l'étape F1 de la figure 2a.

Dans une deuxième phase du procédé selon l'invention, dite *phase de signalisation,* la machine 20 signifie son nouvel état courant en envoyant à l'étape F2 au serveur de télécommunication 40 un signal d'information. Ce signal d'information comprend une information codée utilisée pour identifier un signal sonore parmi ceux enregistrés par le serveur de télécommunication 40. L'information codée comprend par exemple un identifiant représentatif de l'état courant de la machine, le signal sonore identifié étant le signal sonore associé à l'état courant de la machine 20.

A réception de ce signal d'information, le serveur de télécommunication 40 mémorise à l'étape F3 l'information codée transmise et procède à une étape configuration de manière à ce qu'un équipement, demandant l'établissement d'une communication à travers le réseau 10 avec la passerelle, reçoive en retour, dans le train de sonnerie émis à destination de l'équipement, le signal sonore enregistré en association avec l'état indiqué au moyen du signal d'information.

Le mécanisme de configuration du serveur de télécommunication 40 s'appuie de préférence sur un mécanisme de numérotation existant dans le réseau de télécommunication 10.

Ainsi, pour signifier son état, la machine compose au moyen de son modem un numéro spécifique, correspondant à cet état. Le numéro composé par la machine est constitué par exemple par la séquence "ATDT+33777,01", dans laquelle:
- "ATDT" est une commande reconnue habituellement par les modems et qui correspondant à un ordre de numérotation;
- "+33777" est le numéro téléphonique du serveur de télécommunication 40 permettant la configuration des trains de sonneries pour la machine 20,
- "," est un caractère de pause permettant de séparer la partie numérotation de la partie commande;
- "01" est le signal d'information proprement dit, sous forme par exemple de signal DTMF (Dual Tome Modulation Frequency), signal associé à l'état courant de la machine.

Suite à l'étape F3 de configuration du serveur de télécommunication 40, le train de sonnerie associé au numéro de téléphone de la machine 20 est donc celui qui correspond à l'état identifié par le code "01".

Chaque fois que la machine 20 prend un état parmi une liste prédéterminée d'états, la machine envoie au serveur de télécommunication 40 un nouveau signal d'information, les étapes F2 et F3 étant exécutées à nouveau selon ce qui vient d'être décrit.

Dans une troisième phase du procédé selon l'invention, dite *phase d'exploitation,* l'application de gestion ou un utilisateur détermine l'état de la passerelle.

Cet état peut être très facilement consulté par un utilisateur, personne physique, qui compose à l'étape F4 le numéro téléphonique de la machine (+33611111111) sur son téléphone, de manière à émettre une demande en vue de l'établissement d'une liaison téléphonique avec la machine 20. Dans ce cas, les différents signaux sonores utilisés dans le train de sonnerie sont de préférence chacun sous forme de message vocale intelligible par un humain. Par simple écoute du message vocal reçu à l'étape F5, dans le train de sonnerie, en réponse à la demande d'établissement de la liaison téléphonique avec la machine 20, la personne détermine que la machine est dans l'état indiqué par le message vocal.

Cet état peut également être obtenu très facilement par une application informatique qui compose à l'étape F4 automatiquement le numéro téléphonique de la machine et qui reconnaît, par des techniques de traitement du signal appropriées, l'information sonore reçue à l'étape F5 dans le train de sonnerie en réponse à la demande d'établissement de la liaison téléphonique avec la machine 20. Cette application informatique procède ensuite à l'étape F6 à l'analyse du signal reçu de manière à déterminer l'état de la machine associé à ce signal.

Pour simplifier l'analyse informatique des messages sonores, ceux-ci sont avantageusement codés sous forme de signaux sonores DTMF car bon nombre d'équipements utilisant le réseau de télécommunication disposent déjà de circuits électroniques capables de reconnaître des signaux DTMF.

A l'étape F7, suite à l'analyse du signal sonore reçu, l'application information est capable de déterminer si une action doit être accomplie vis-à-vis de la machine 20, par exemple: opération de maintenance à distance, opération de maintenance sur place, envoi d'un message d'avertissement, enregistrement de l'état de la machine, etc.

Dans le cas où la machine 20 est, pour une raison ou pour une autre, déconnectée du réseau 10, l'information sur l'état de la machine 20 reste disponible. En effet, en appelant le numéro téléphonique de la machine, le réseau de télécommunication continuera à diffuser l'information sonore programmée.

A titre d'illustration, les différentes étapes d'un processus mis en oeuvre par une passerelle GPRS lors d'une mise à jour du logiciel de cette passerelle sont décrites.

Le processus est initié suite à la réception par la passerelle d'une demande de mise à jour de son logiciel.

A l'étape E1: la passerelle reçoit une nouvelle version de son logiciel embarqué et démarre le téléchargement du logiciel: elle envoie (étape F2) au serveur de télécommunication 40 le signal d'information ATDT+33777,06 associée au message vocal "téléchargement de logiciel". A ce stade, la machine est dans un état où elle peut communiquer en GSM, SMS et GPRS.

A l'étape E2: à la fin du téléchargement, la passerelle redémarre spontanément. Elle programme l'état "00" juste avant de redémarrer: elle envoie (étape F2) au serveur de télécommunication 40 le signal d'information ATDT+33777,00 associée au message vocal "redémarrage spontané". A ce stade, la machine est dans un état où elle ne peut communiquer ni en GSM, ni en SMS et ni en GPRS.

A l'étape E3: au début du redémarrage, dès l'activation du réseau GSM, la passerelle envoie (étape F2) au serveur de télécommunication 40 un signal d'information signalant qu'elle est en train de redémarrer: elle envoie le signal d'information ATDT+33777,01 associée au message vocal "en cours de redémarrage". A ce stade, la machine est dans un état où elle peut communiquer en GSM et SMS: la passerelle est en mesure de numéroter sur le réseau GSM, n'est pas encore en mesure de communiquer en GPRS. Le démarrage de la passerelle n'étant pas fini, cet envoi d'information est de préférence fait très tôt dans le processus de redémarrage. En complément, différents signaux d'information successifs peuvent être envoyées lors du processus démarrage de manière à différencier différents sous-états de la passerelle lors de son redémarrage.

A l'étape E4: en fin de démarrage, la passerelle entre dans un état nominal: elle envoie (étape F2) au serveur de télécommunication 40 le signal d'information ATDT+33777,02 associée au message vocal "état nominal". A ce stade, la machine est dans un état où elle peut communiquer en GSM et SMS, la passerelle n'ayant pas encore monté son contexte GPRS.

A l'étape E5: la passerelle reçoit un SMS lui demandant de monter son lien GPRS puis monte ce lien: elle envoie (étape F2) au serveur de télécommunication 40 le signal d'information ATDT+33777,03 associée au message vocal "GPRS actif". A ce stade, la machine est dans un état où elle peut communiquer en GSM, SMS et GPRS. Dans certains cas de figure, il est impossible de communiquer en GPRS avec un équipement, alors que le lien GPRS est bien monté (problème de routage, pare-feu, etc...). Le fait de signaler l'état de la machine après montage du lien GPRS permet de lancer, au niveau d'un dispositif de gestion, une procédure de vérification afin de vérifier que le contexte GPRS a été correctement activé par la passerelle.

Si, après avoir exécuté le processus de mise à jour, la passerelle ne répond pas normalement à un envoi d'un message court SMS à travers le réseau GPRS, il est probable que ce processus se soit anormalement déroulé. Il est alors possible de connaître le dernier état signalé par la passerelle en composant simplement le numéro téléphonique de la passerelle sur un téléphone tout à fait banal.

Différents cas d'erreur pouvant intervenir durant le processus de redémarrage décrit plus haut sont décrits.

Dans le cas où le processus de redémarrage s'interrompt immédiatement, la passerelle se bloque par exemple parce qu'un des programmes qu'elle exécute est corrompu. La passerelle est alors totalement inopérante. L'appel téléphonique sur le numéro GSM de la passerelle provoque la réception du message "redémarrage spontané" ce qui signifie que l'état "en cours de redémarrage" n'a pas été atteint. On en déduit qu'aucune action à distance n'est possible sur la passerelle et une intervention physique est vraisemblablement nécessaire.

Dans le cas où le redémarrage s'est parfaitement bien opéré, mais que la passerelle n'est pas atteignable via le réseau IP, l'appel sur le numéro GSM de la passerelle provoque la réception du message "GPRS actif". On en déduit que la passerelle s'est connectée sur le réseau GPRS et que le problème de communication se situe au niveau du réseau IP entre l'application M2M et la passerelle plutôt qu'au niveau du fonctionnement de la passerelle elle-même.

Les étapes F2 à F3 de la figure 2a et F4 à F7 de la figure 2b, bien que représentées sur des figures différentes, sont susceptibles de se dérouler en parallèle l'une avec l'autre, puisque, d'une part la machine communicante 20 signale sont état chaque fois qu'elle prend un état parmi une liste prédéfinie d'états ou effectue un traitement prédéfini (étape F2 et suivante) et que, d'autre part, l'application de gestion 30 est susceptible d'interroger (étape F4 et suivantes) à tout moment le réseau 10 pour connaître le dernier état signalé par la machine communicante 20.

L'invention se généralise à tout type de processus exécuté par la machine 20, celle-ci signalant différents stades d'avancement dans l'exécution d'un processus au moyen chaque fois d'un signal d'information associé au stade chaque fois atteint. Ce stade d'avancement correspond, selon le cas, au fait qu'une étape, parmi une liste d'étapes nécessaires à l'exécution du processus, a été accomplie, va être accomplie ou est en train d'être accomplie.

En alternative, lorsque la passerelle exécute un processus itératif, la passerelle émet des signaux d'information à intervalle de temps régulier pour signaler son état, envoyant un signal d'information comprenant non seulement une indication relative à son état mais en outre un numéro d'ordre indiquant le nombre d'itérations effectuées.

## Revendications

1. Procédé de configuration d'un serveur (40) de train de sonnerie associé à une machine apte à communiquer à travers un réseau (10) de télécommunication, comprenant:
- une étape (F2) de réception par ledit serveur de train de sonnerie, en provenance de ladite machine, d'un signal d'information comprenant un identifiant représentatif d'un état dans lequel se trouve ladite machine au moment de l'émission dudit signal,
- une étape (F3) de configuration dudit serveur de train de sonnerie de manière à ce qu'un équipement, demandant l'établissement d'une liaison de communication à travers ledit réseau avec ladite machine, reçoive en retour dans le train de sonnerie un signal sonore représentatif de l'état indiqué au moyen dudit signal d'information.

2. Procédé de gestion d'au moins une machine (20) apte à communiquer à travers un réseau (10) de télécommunication, comprenant :
- une étape (F4) d'émission d'une demande d'établissement d'une communication à travers ledit réseau avec ladite machine,
- une étape (F5) de réception, dans le train de sonnerie reçu en réponse à ladite demande, d'un signal sonore représentatif d'un état de ladite machine,
ledit état étant celui dans lequel se trouvait ladite machine au moment où ladite machine a envoyé à un serveur de train de sonnerie un signal d'information comprenant un identifiant représentatif dudit état pour commander la configuration du train de sonnerie associé à la machine.

3. Procédé selon la revendication 2 comprenant une étape (F6) d'analyse du signal sonore reçu afin de déterminer ledit état.

4. Procédé selon l'une quelconque des revendications précédentes, dans lequel ledit état correspond à stade atteint par ladite machine lors de l'exécution d'un processus.

5. Procédé selon la revendication 4, dans lequel ledit processus est un processus de connexion audit réseau.

6. Machine (20) apte à communiquer à travers un réseau de télécommunication, comprenant des moyens pour envoyer, à travers ledit réseau à un serveur (40) de train de sonnerie, un signal d'information comprenant un identifiant représentatif d'un état dans lequel se trouve ladite machine au moment de l'émission dudit signal,
ledit signal d'information étant destiné à commander la configuration du serveur de train de sonnerie, de manière à ce qu'un équipement (30), demandant l'établissement d'une liaison de communication à travers ledit réseau avec ladite machine, reçoive en retour dans le train de sonnerie un signal sonore représentatif de l'état indiqué au moyen dudit signal d'information.

7. Serveur (40) de train de sonnerie, apte à communiquer à travers un réseau de télécommunication, comprenant,
- des moyens de réception, en provenance d'une machine, d'un signal d'information comprenant un identifiant représentatif d'un état dans lequel se trouve ladite machine au moment de l'émission dudit signal,
- des moyens de configuration dudit serveur de train de sonnerie de manière à ce qu'un équipement, demandant l'établissement d'une liaison de communication à travers ledit réseau avec ladite machine, reçoive en retour dans le train de sonnerie un signal sonore représentatif de l'état indiqué au moyen dudit signal d'information.

8. Dispositif (30) de gestion d'au moins une machine, apte à communiquer à travers un réseau de télécommunication, comprenant,
- des moyens d'interrogation pour émettre une demande d'établissement d'une liaison de communication à travers ledit réseau avec ladite machine,
- des moyens de réception et d'analyse d'un signal sonore, reçu en réponse à ladite demande dans le train de sonnerie et représentatif d'un état de ladite machine,
ledit état étant celui dans lequel se trouvait ladite machine au moment où ladite machine a envoyé à un serveur de train de sonnerie un signal d'information comprenant un identifiant représentatif dudit état pour commander la configuration du train de sonnerie associé à la machine.

9. Programme informatique comprenant des instructions de code de programme pour l'exécution des étapes du procédé selon l'une des revendications 1 à 6 lorsque ledit programme est exécuté par un processeur de données.

10. Support d'enregistrement lisible par un processeur de données sur lequel est enregistré un programme comprenant des instructions code de programme pour l'exécution des étapes du procédé selon l'une des revendications 1 à 5.
